(19) Europäisches Patentamt / European Patent Office / Office européen des brevets

(11) **EP 1 845 374 A1**

(12) **EUROPEAN PATENT APPLICATION**

(43) Date of publication:
**17.10.2007 Bulletin 2007/42**

(51) Int Cl.:
***G01N 33/50*** (2006.01)   ***C12Q 1/68*** (2006.01)
***B01L 3/00*** (2006.01)

(21) Application number: **06112678.5**

(22) Date of filing: **14.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Koninklijke Philips Electronics N.V.**
**5621 BA  Eindhoven (NL)**

(72) Inventor: **The designation of the inventor has not yet been filed**

(74) Representative: **Van Velzen, Maaike Mathilde**
**Philips**
**Intellectual Property & Standards**
**P.O. Box 220**
**5600 AE Eindhoven (NL)**

(54) **Form inhibitor membrane for a flow-through cell**

(57)    An improved flow-through device is provided wherein foam produced by the pumping of fluid in the device is kept outside the reaction chambers by way of a hydrophobic or hydrophilic porous membrane acting as an air trap membrane.

FIG. 1

EP 1 845 374 A1

**Description**

The present invention generally relates to fluid handling, in particular in a device or method for analysis. In particular, this invention relates to apparatus for flow-through processing or analysis or diagnosis such as provided in bioreactors, sensors or parts of sensors especially parts of biosensors, and to methods of using such apparatus. The processing or analysis or diagnosis may include hybridization or ligand binding.

Biosensors are known for analysis of a sample. Typically, samples comprising an analyte are contacted with a specific probe, which can be detected and/or quantified optically or by other physical means. Such biosensors make use of detection methods that are based on the interaction of complementary (oligo) nucleotides, antigen-antibody, ligand-receptor or other specific protein-protein interactions. Most conveniently the probes or analytes are immobilized on a support allowing physical separation of potentially interfering components in the samples or reagents. Exemplary supports include multiwell plates, membranes, columns, or chips made of different types of material capable of binding the analyte and/or probe of interest.

Analysis is often performed in order to investigate qualitatively and/or quantitatively the composition of a (liquid) sample, in particular relating to the detection of the presence, absence or amount of specific DNA or RNA sequences or proteins in a sample. Especially PCR, the Polymerase Chain Reaction, has contributed enormously to the development of assays of all types for the detection of the presence or absence of DNA or RNA sequences. At present, it is possible to collect DNA containing samples from an organism and determine the presence, absence or amount therein of specific DNA sequences. Technology is available to perform such analysis for multiple target sequences at the same time, so-called multiplex detection of target sequences to thereby increase throughput. For example, for detection of specific bacteria in a blood sample or the like, a detection method is known which is based on a DNA multiplication process and binding of this DNA to fluorescent tracer molecules. Only specific types of DNA will bind to specific probe molecules. The presence of bound DNA is then detected by optical means, e.g. activation by a light source and detection by a camera. The detection of the presence, absence or amount of DNA and/or RNA is indicative, for instance, for the presence, absence or amount of a gene, an allele of a gene, a genetic trait or disorder, a polymorphism, a single nucleotide polymorphism (SNP) or of the presence of exogenous DNA or RNA in an organism, i.e. the presence, absence or amount of pathogens or bacteria in organisms.

For large scale and/or time-efficient processing of samples, devices have been developed in which the different handling steps of the detection reactions (application of sample, washing, contacting with probe) have been automated. Rapid diagnosis e.g. of an infectious disease in a patient sample or of a contaminant in a food batch can be crucial. To achieve faster hybridization or binding of the reagents flow-through configurations have been proposed. Flow-through hybridization as described in US 5741647, is based on directing the flow of the reacting molecules through a porous membrane on which the target oligonucleotide probes are immobilized. The molecular binding rate is increased by orders of magnitude since the molecular interaction occurs in three-dimensional volumes rather than a conventional two-dimensional surface.

A flow-through cell using alternating flow is known from EP1419819 to generate an alternating flow through a substrate provided in a well whereby the liquid volume of the sample fluid is forced to pass through the channels in the substrate from the upper side of the substrate to the lower side of the substrate and back at least one time, under conditions that are favorable to a reaction between any analyte present in the sample and the binding substance.

An object of the invention is to provide alternative or improved apparatus for flow-through processing or analysis or diagnosis such as provided in bioreactors, sensors or parts of sensors especially parts of biosensors, and to methods of using such apparatus. The processing or analysis or diagnosis may include hybridization or ligand binding. An advantage of the device and method of the present invention, is that it reliable analysis or diagnosis makes it easier to develop suitable remedies, e.g. the preparation of medicaments for the treatment of a diagnosed ailment. For instance, the detection in a sample (say, blood) from an organism (say, a human) of a pathogen (say, a bacteria) may be carried out more effectively and accurately and lead to the diagnosis and the corresponding treatment (say, an antibiotic).

According to a first aspect, the invention provides a flow-through device comprising a flow path including:

- a first chamber
- a second chamber
- a porous substrate between said first and said second chamber, and
- a fluid flow actuator ensuring the passing of sample liquid along the flow path from said first to said second chamber through said substrate or via a channel or channels around said substrate,

characterized in that at least one porous membrane is provided in the flow path so as to reduce or prevent the formation of foam in any of the chambers or channels.

The device can be part of a bioreactor or a biosensor. Such an air trap membrane or air filter can help prevent foam from building up and impeding the flow during subsequent flow cycles or disrupting the optical detection path.

The porous membrane may be provided between said second chambers and said return channel.

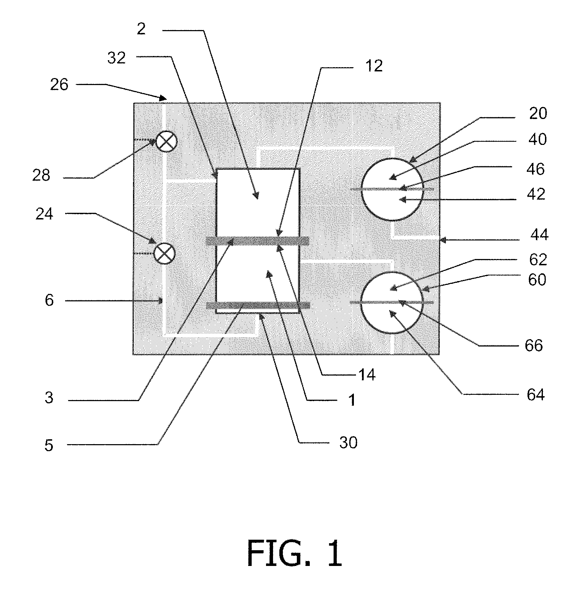

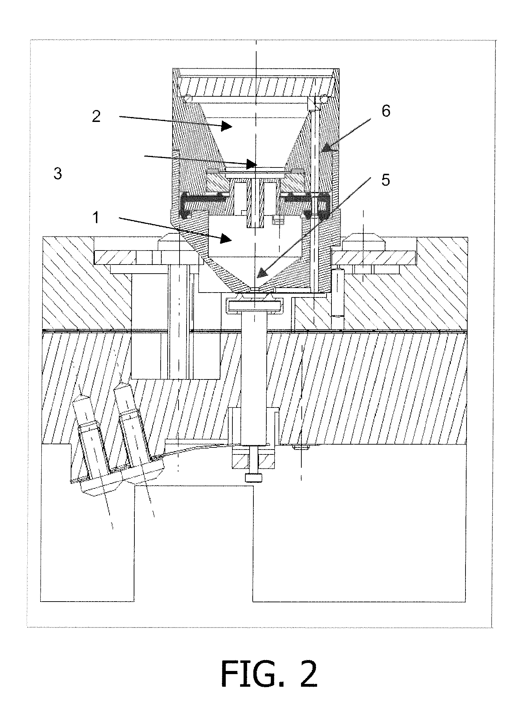

This can prevent foam build up in the first chamber (upper chamber of figure 1 or 2).

The porous membrane should have pores small enough that the capillary pressure inside the membrane is higher than the air pressure used for transferring the fluid. The porous membrane should be wet table and is therefore preferably hydrophilic when aqueous fluids are used. This has the advantage of preventing foam build up in common biological fluids, which are aqueous and often contain detergents.

The device can be arranged so that the fluid is moved unidirectional between the first and the second chamber. A one-way flow makes the implementation of the fluid flow actuator simpler.

The device may also be adapted so that the fluid is cycled or recycled from said second chamber to said first chamber through a return channel. This allows a better use of reagents allowing a longer contact time between the substrate and the sample liquid.

Alternatively, the fluid flow actuator is adapted for bi-directional flow to thereby move said fluid from said first to said second chamber and back from said second chamber to said first chamber through said porous substrate. Bi-directional flow not only allows a better use of reagents allowing a longer contact time between the porous substrate and the sample liquid but also provides better mixing.

With bi-directional flow, foam can be reduced by the porous substrate in which capture probes are immobilized. In this particular case, the porous substrate thus has a double function.

Reagents, analyte molecules or probes can be immobilized on or retained by the porous substrate. Immobilization/retention can allow subsequent detection, e.g. by fluorescence, phosphorescence, chemiluminescence's, electro luminescence, etc. For DNA or RNA analysis, the substrate is preferably capable of covalently or non-covalently binding oligonucleotides.

The present invention may also provide a method for preparing an analyte in a sample liquid for detection, which method comprises the steps of

  a) immobilizing a probe capable of specifically binding to said analyte on a porous substrate positioned between a first and a second chamber of an analytical device,
  b) transferring said sample liquid containing said analyte along a flow path including said first and said second chamber to thereby flow the sample liquid over said porous substrate,
  c) optionally recycling said sample liquid to said first chamber through a return channel,

characterized in that a porous membrane is provided in the flow path so as to reduce or prevent the formation of foam in any of the chambers or channels as a result of said transferring.

The present invention may also provide a method for processing a sample liquid, which method comprises the steps of

  a) immobilizing a first reagent on a porous substrate positioned between a first and a second chamber of a flow-through device,
  b) transferring said sample liquid containing a second reagent along a flow path that includes said first and said second chamber to thereby flow the sample liquid fluid over said porous substrate,
  c) optionally recycling said sample liquid to said first chamber through a return channel

characterized in that a porous membrane is provided in the flow path so as to reduce or prevent the formation of foam in any of the chambers or channels as a result of said transferring.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

How the present invention may be put into effect will now be described by way of example with reference to the appended drawings, in which:

  FIG. 1 shows a flow-through device according to one embodiment of the present invention comprising a first (2) and a second (1) chamber, a substrate (3), a pressure means capable of pumping fluid through the substrate from chamber 2 to chamber 1 (20), a pressure means capable of pumping fluid through the substrate from chamber 1 to chamber 2 (60), pump channels, a return channel (6), and a porous membrane (5) positioned at the bottom of chamber 1.
  FIG. 2 shows a further embodiment of the flow-through device of Fig. 1.

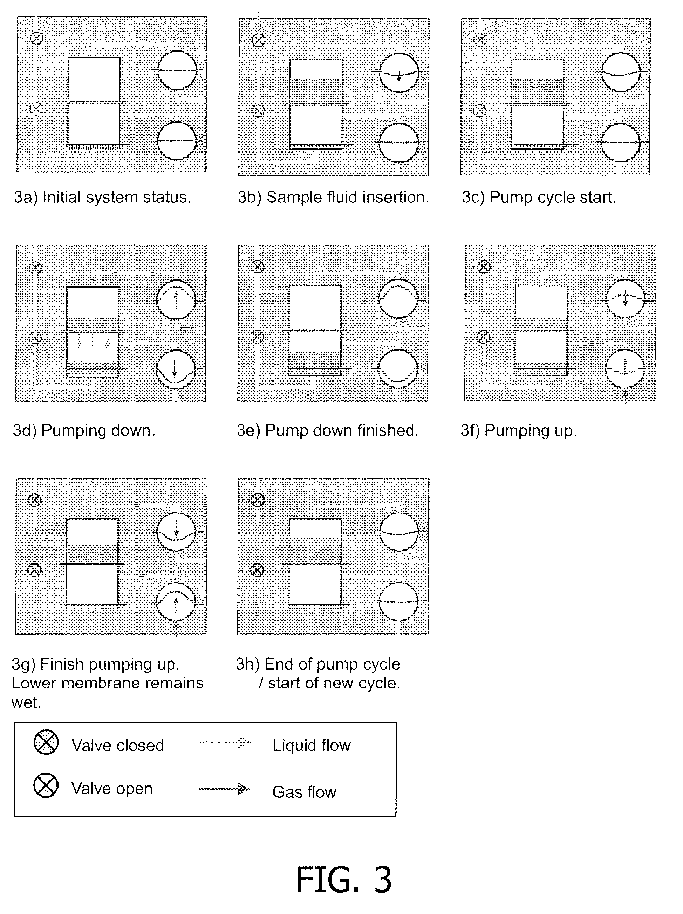

  FIGS. 3a to h show overviews of the pumping cycles that can be used with the present invention using the flow-through device of Fig. 1, in particular flow-through devices mentioned in the particular embodiments where either pressure means (20) or pressure means (60) only is present.

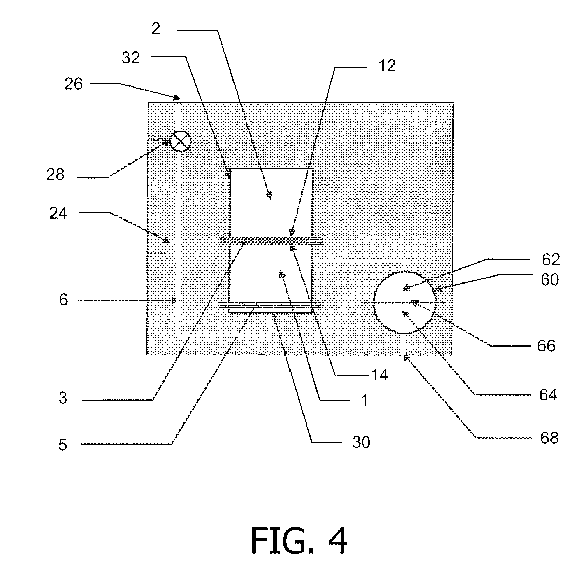

  FIG. 4 shows a flow-through device according to another embodiment of the present invention comprising a first (2) and a second (1) chamber, a substrate (3), a pressure means capable of pumping fluid through the substrate from chamber 2 to chamber 1 (60), pump channels, a return channel (6), and a porous membrane (5) positioned at the bottom of chamber 1.

The present invention will be described with respect to particular embodiments and with reference to certain drawings but the invention is not limited thereto but only by the claims. Any reference signs in the claims shall not be construed as limiting the scope.

The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In particular, in the description, the embodiments and the claims, the terms "first volume" or "first chamber" and "second volume" or "second chamber" should be deemed interchangeable, in that they solely serve to discern the two volumes or chambers. For example by flipping the device upside down, or by introducing the sample liquid in the second volume, or in any other way, the two items may be interchanged.

Moreover, the expression "in fluid communication" is intended to mean that the fluid (liquid or gas) is able to contact the surface or volume by simply flowing towards that surface or into that volume (without passing a substrate), as in communicating vessels. It is not intended to be limited to those cases that there is actually a fluid present that contacts the surface or is present in the volume.

Furthermore, it is noted that each of the first and second volume may comprise a number of sub volumes, for example to guide sample liquid to different parallel parts of the substrate with different binding substances, or to more than one substrate. Functionally, and for the purpose of this document, these sub volumes are considered to be one volume, either a first volume or a second volume.

The expression "channel" comprises, for the purpose of the present invention, not only straight-walled paths from one end to another, but rather more generally any physical path for fluids between one end of the substrate and another. Such channels may thus also comprise random fluid paths, such as curved or irregular paths, ramifications, a collection of interconnected voids in the substrate, et cetera. The substrate may thus comprise e.g. sponge-like materials having such interconnected voids, but also non-woven fabrics having numerous fluid paths between the fibers, and so on.

It is explicitly noted that the expression "pump" comprises, for the purpose of the present invention, both active and passive pumps. Herein, a passive pump is intended to mean a device that comprises a closed chamber or the like with a variable volume, such as a pump volume with a flexible wall. Here, such a pump is called passive since it does not actively build up a pressure but serves to pass on a pressure exerted thereon by another, external pump. Active pumps are able to establish a pressure difference by themselves. In other words, a "pump" in the present context refers to a closed space with a moveable part for changing the volume of the part.

The present invention relates to a flow-through device for processing, e.g. analyzing, a sample liquid. The analysis may be for the presence or amount of an analyte in the sample liquid. A flow-through cell according to an embodiment of the present invention is shown schematically in Fig. 1 and a part of an embodiment of the device is shown in Fig. 2. The flow-through cell such as shown in Fig. 1 or Fig. 2 can be part of a bio-processing device such as a bioreactor or a sensor or detector arrangement, e.g. in the form of a cartridge for molecular diagnosis. The cell comprises a porous substrate 3 having a first surface 12 and an opposite second surface 14, the substrate 3 having a plurality of through going channels from the first surface to the second surface. Optionally, the substrate 3 can be provided at least partially with a binding substance specific for the analyte. A first chamber 2 or first volume is in fluid communication with the first surface, a second chamber 1 or volume is in fluid communication with the second surface, and a pressuring means such as a pressurized fluid or pump is provided for establishing a pressure difference between the first chamber 2 and the second chamber 1. For example, the pump can be operatively connected to the first chamber.

In an embodiment of the present invention a pump is denoted by reference numeral 20. The return channel 6 connects the second chamber 1 and the first chamber 2 via first opening 32 and second opening 30, and may be closed off by means of optional return channel valve 24. When only pump 20 is present, valve 24 is required for creating overpressure in first chamber 1. The valve 24 is opened to release pressure so that the fluid moves back through channel 6 from second chamber 1 to first chamber 2. Sample liquid introduction device 26 may be closed off by means of inlet valve 28.

In an embodiment of the present invention pump 20 comprise a pump volume 40 and a counter volume 42 with a pressure inlet opening 44, and is divided by flexible membrane 46.

The porous substrate 3 may be any suitable type of substrate known in the art. For example non-woven fabrics, substrates based on polished and etched hollow fibers of glass or other materials may be used, electroformed substrates, and so on. Preferably, the substrate is at least partly transparent for radiation, preferably optical radiation, such as ultraviolet, visible light or infrared. This improves the detection possibilities for the substrate.

The sample liquid introduction device 26 has been indicated only very diagrammatically as a kind of introduction channel. In principle, any desired introduction device known in the state of the art may be provided. The sample liquid introduction device 26 may be closeable by means of inlet valve 28. Note that, when the inlet valve 28 is closed, the device of Fig. 1 comprises a completely closed system, comprising the chambers 1, 2 and 40. This greatly reduces the risks of contamination.

The flow-through cell can be operated as follows in accordance with an embodiment of the present invention. Sample liquid is first inserted into the upper chamber 2. By applying fluid pressure above the liquid in chamber 2, the sample liquid, e.g. containing an analyte, e.g. a polynucleotide in a hybridization buffer, is pumped from upper chamber 2 to the second lower chamber 1 through a porous substrate 3. Chemical or biological entities such as probes, or reagents or analyte molecules will usually be retained by, or immobilized on the substrate. For example, in the context of DNA detection, the porous substrate 3 retains or immobilizes capture probes. A pumping cycle is completed by applying fluid pressure difference between the sample liquid in chamber 1 and the chamber 2 which forces the fluid into chamber 1 and then pumping it back to chamber 2 through the return channel 6. The pressure difference between chamber 1 and 2 can be built by using two pressurizing chambers and alternating positive pressures to positively drive the fluid or by using one chamber and alternating between negative and positive pressures. In both cases pressure differences are generated between chambers 1 and 2 to thereby force liquid to move there between. In a typical application such as DNA detection this pumping cycle is repeated approximately 30 times. Due to the small dimensions of the pores in the porous substrate (resulting in a high surface/volume ratio) and the extended contact time between target molecules and capture probes as a result of the numerous pumping cycles, the capture efficiency of target molecules (e.g. in hybridization experiments) is very high.

The substrate 3 comprises through going channels, connecting first chamber 2 and second chamber 1. If the substrate is wetted, it may show a high bubble pressure. Herein, bubble pressure relates to the pressure difference across the substrate that is required to pump gas through the substrate. To do that, fluid in the substrate must be displaced against the capillary action of the pores in the substrate. This bubble pressure is preferably much higher than the sample liquid pumping pressure, which is taken to be the pressure that allows liquid to pass through the substrate. Many substrates that can be used for substrate 3 show a bubble pressure in the order of several bars, while the sample liquid pumping pressure is in the order of several tens of millibars up to several hundred millibars, although of course other values are possible. All this depends amongst others on capillary pressure in the channels within the substrate 3. It is noted that devices described below for use with the present invention are in principal suited for substrates 3 with a high bubble pressure, while they may be used for substrates having comparable liquid pumping pressures and bubble pressures, if need be.

Such high bubble pressures allow pumping the sample liquid that is collected on one side of the substrate 3 through the substrate 3 to the other side thereof. There, the sample liquid will come off the substrate. In other words, the substrate is contacted by gas on the other side. Hence, if now the pressure (difference) would be reversed, only gas would be pumped through the substrate. However, due to the increased pressure required therefore, this will not happen, and the pressure will increase in the second chamber 1. In other words, the substrate 3 acts as a one-way valve, such that the sample liquid may be pumped out of the second volume by increasing the gas pressure above the liquid in the second chamber 1.

The above discussion of passing liquid and/or gas through the substrate 3 in particular holds for a substantially horizontal positioning of the substrate 3 when in use. When positioned horizontally, the substrate 3 may be wetted evenly, and liquid will pass more or less homogeneously through the substrate 3. This has a positive influence on detection homogeneity and accuracy. Nevertheless, the substrate 3 may be positioned tilted or even vertically, although this may influence said detection homogeneity.

In the case of a substrate 3 in which the bubble pressure and the fluid pumping pressure do not differ substantially, this will not function properly, as gas may pass through this substrate relatively easy. Hence, as an option, at least one of the first chamber and the second chamber comprises a contact volume directly in contact with the substrate, a reservoir volume, and a valve between the contact volume and the reservoir volume. This option, with a dividable volume, allows the use of a substrate having a relatively low so-called bubble pressure, as compared to the liquid pumping pressure for pumping a sample liquid through the sample. Sample liquid pumped through the substrate towards the volume on the second, or opposite, side of the substrate, will not collect in the volume directly contacting said second or opposite side, i.e. the contact volume, but will flow on, through the valve, herein sometimes referred to as contact volume valve, and will collect in the reservoir volume. The contact volume valve may take over the function of the high bubble pressure of other substrates by closing off the reservoir volume. All other functionalities of other embodiments mentioned herein may then also apply to substrates with not very different pumping pressures and bubble pressures. In other words, the embodiment with the second volume comprising a contact volume, a reservoir volume and a contact volume valve is even more versatile as to the selection of substrate, however at the cost of a higher parts count.

As described above, a substrate which, when wetted e.g. by the sample liquid, has a high bubble pressure, the substrate may function as a gas barrier, while allowing the flow of sample liquid there through. By providing a pressure (difference) between the first chamber 2 and the second chamber 1 that is between the bubble pressure and the sample liquid pumping pressure, the sample liquid will be pumped through the substrate while gas is still trapped by the substrate. Thus an inherent property of the substrate is that it can also functions as an "air trap membrane".

Advantageously, the bubble pressure is at least 10% higher, preferably at least 50% higher, and even more preferably at least 200% higher than said sample liquid pump pressure. When the bubble pressure is at least 10% higher, it is relatively easy to establish a suitable pressure difference, between the sample liquid pumping pressure and the bubble pressure, allowing fluid flow without gas flow. Furthermore, not too critical variations of either or both of the bubble and pumping pressure, e.g. due to binding material to the substrate, do not affect the proper functioning of the device. When the bubble pressure is at least 50% higher, it is not only easy to establish a working pressure difference, but the pressure difference may be selected such that the sample liquid flow rate is in a useful range, since a higher pressure difference ensures a higher flow rate. In particular, when the bubble pressure is at least 200% higher than the sample liquid pumping pressure, a very useful sample liquid flow may be established. Note that other relative differences between bubble pressure and sample liquid pumping pressure may still lead to useful results.

In the above discussion, only relative differences have been discussed. It is alternatively also possible to select the substrate such that the absolute difference between the bubble pressure and the sample liquid pumping pressure is as high as possible, or at least higher than a desired amount. In particular, but not limiting, the bubble pressure is at least 100 mbar, preferably at least 1 bar higher than the sample liquid pumping pressure, for a wetted substrate, with similar advantages as mentioned above. Again, other differences may also lead to desirable results.

In particular embodiments, the device comprises a wall around at least one of the first chamber 2 and the second chamber 1 which is at least partially transparent. Said at least partially transparent wall allows optical detection, e.g. of DNA being bound to optically variable probes etc. on the substrate 3 without removing it from the device. Of course, simple visual inspection may also be allowed by such a transparent part.

Transparent is intended to comprise at least: transparent to visible light, and/or to ultra-violet and/or to infrared radiation, although transparency for other types of radiation is also contemplated. The at least partially transparent wall may be provided as the wall material itself, as a separate transparent part in a hole in the wall (i.e. a window), etc.

In embodiments of the present invention, the device further comprises a detection system. Providing a detection system makes the device as a whole more versatile, and it is easier to match the analysis device to particular products to be detected. The detection device may itself comprise a transparent window, or be provided in an operative position with respect to a window, a hole in the wall, et cetera.

The detection device may comprise any suitable known detection system, such as an optical detection system, e.g. fluorescence detection. If desired, the analysis device, and/or the detection device, may comprise additional parts, such as a light source, a filter etc., required for its functioning, e.g. detecting the analyte bound to the binding material. These additional parts are only optional in the analysis device.

The device may detect based on label, length, mobility, nucleotide sequence, mass or a combination thereof. In certain embodiments the device can detect based on optical, electrochemical, magnetic principles. In principle any suitable detection device known from prior art may be used.

Embodiments of the device according to the present invention may also optionally comprise a data collection device to collect data obtained from the detection device, or may also comprise optionally a data processing device to process the data.

To allow introduction of sample liquid the device described above may further comprise a sample liquid introduction device. This sample liquid introduction device is not considered to be a restriction on the present invention. It may for example comprise simply an introduction opening and/or a introduction channel, preferably with a closing valve. After introducing the sample liquid, said valve may be closed, and a completely closed device is provided, or at least possible. Any other implementation of the sample liquid introduction device is included within the scope of the present invention, e.g. those allowing (substantially) contamination-free introduction of a sample liquid.

Optionally, the device of the invention is substantially closed. Of course, during introduction of the sample liquid, there is a connection with another part of the system or with the outside world. However, it is contemplated that a device according to the present invention can be at least substantially completely closeable, by means of closure means present on or in the device. This may be achieved e.g. by providing valves on all possible channels to the environment. Such a device may provide analysis with less risk of contamination, e.g. through exogene DNA from an operator.

In particular, the invention can be implemented as a substantially closeable cassette comprising the flow-through device according to the invention. Such a cassette is preferably compact and portable, such that it may be easily employed for use *in situ.* It may preferably comprise any other desired device, such as for storage of fluids, one or more pumps, etc, such as described in this application, or otherwise known to the skilled person. Advantageously, the cassette is disposable, in order to prevent contamination when reusing such a cassette. It is still possible however to provide a reusable cassette according to this invention.

Optionally, the return channel 6 allows sample liquid to flow out into the first and/or second chamber opposite the substrate 3. This allows optimum use of e.g. gravity to collect the sample liquid, and ensures effective pumping of the sample liquid. This effect is improved even further if the wall around the first chamber and/or the wall around the second chamber has a shape that tapers towards a respective opening in the wall, that connects the respective chamber with the return channel as shown, for example, in Fig. 2 for the lower chamber 1. Hence the lower part or either the first or second chamber may be frustoconical in form. This reduces the risk that sample liquid remains behind in the first or second chamber.

However, a drawback of the device described above is the formation of foam when the fluid is pumped, e.g. back from chamber 1 to chamber 2. The foam can be formed in the return channel 6 due to mixing of the liquid with the fluid, e.g. compressed air, used for pumping. The foam can fill both chambers completely and can escape to other parts of the device, e.g. the pump chambers, causing loss of fluid and reduction in efficiency, e.g. in hybridization efficiency.

The foam can be formed due to mixing of liquid, with a gas such as air used for applying pressure in the return channel. Eventually the foam can fill significantly or completely one or both chambers and afterwards can escape to other parts of the sensor or detector arrangement, e.g. to other parts of a molecular diagnosis cartridge. The presence of air bubbles on the substrate will affect the efficiency of the reaction between the reagents and/or analyte molecules and/or the probes, depending upon which of these is provided on the substrate and can obstruct the optical light path for detecting the captured molecules. Where the fluid is repeatedly cycled through the device, this can lead to loss of all fluid after 2-3 cycles and thus preventing the reaction or binding of the reagents and/or analyte molecules and/or the probes, depending upon which is on the substrate.

According to the present invention, an improvement of a flow-through device is provided, which addresses the problem of foam formation. The flow-through device that can be part of a bio-processing device such as a bioreactor or of a sensor or detector arrangement, e.g. in the form of a cartridge for molecular diagnosis as shown schematically in Figs. 1 and 2, has an additional membrane (5) referred to herein as the 'air trap membrane' provided in the sample liquid flow path. According to the present invention, formation of foam upon moving, e.g. pumping of liquid reagents, or liquid containing analyte molecules or probes along a flow path that includes chamber 1 and chamber 2 can be prevented by using an air trap membrane 5 which is a porous membrane capable of retaining air from being forced through fluids and of capturing the air bubbles that are generated by fluid flow. The trapping of air by the membrane is achieved by limiting or controlling the pressure on the fluid and/or ensuring that the size of the pores is such that liquid is allowed to flow through the membrane whereas air cannot penetrate into the membrane. Preferably, the wet ability of the membrane for the sample liquid should be good, such that the liquid remains as a coating on the membrane internal surfaces at the applied pressure(s).

The air trap membrane is preferably placed in some embodiments at the outlet of at least one of the chambers 1 and/or 2. Accordingly, in one embodiment an air trap membrane 5 is placed at the bottom of the second chamber 1 where the sample liquid exits to the return channel 6 or to exhaust. However, an additional air trap membrane may be placed at the outlet of the first chamber 2 to the second chamber 1. This second air trap membrane may also be provided by the porous substrate 3 in one embodiment. According to a particular embodiment, the flow in the device is unidirectional from one chamber to another, e.g. from chamber 2 to chamber 1. The fluid is optionally recycled to chamber 2 by way of a separate return channel 6 or channels connecting chamber 1 and chamber 2. While transferring the fluid from chamber 2 to chamber 1, the fluid passes over or through the porous substrate 3. The return path along the return channel 6 or channels avoids the substrate 3. In this configuration, the air trap membrane 5 can be positioned at or adjacent to the outlet of chamber 1 or to the inlet to chamber 2. For example the membrane 5 can be located between a fluid flow actuator such as a pump and the outlet of chamber 1 or the inlet of chamber 2. More specifically, where the fluid flow actuator is located below chamber 1, the air trap membrane 5 is positioned at the bottom of chamber 1 as shown in Fig. 2.

The air trap membrane 5 used in the context of the present invention can consist of a porous material which is either hydrophilic or hydrophobic depending upon whether the sample liquid which flows through the membrane is water-based or organic solvent-based. The membrane should be chosen such that the fluid wets the surface of the membrane. In one embodiment the membrane 5 will consist of a material, which does not adsorb reagents used in the chambers of the device of the invention. In another embodiment the air trap membrane 5 may contain several locations that can adsorb compounds that may interfere with the capture process on the capture substrate. For example, (labeled) primers that have not been used for amplification may be captured which reduces background signals on the capture substrate 3. Alternatively capture probes may be provided that remove the amplicon strands that are not labeled). Typically, the sample liquid to be passed through the membrane 5 will be aqueous, e.g. when the apparatus is used with biological fluids. Examples of suitable materials for the air trap membrane of the present invention include but are not limited to membranes of silver metal, aluminium oxide, nitrocellulose optionally reinforced with nylon, polyethersulfone, polycarbonate (PCTE), PTFE, PVDF, or polyesters. Alternatively, nylons or mixed cellulose esters can be used. The materials may have been coated or surface-treated to change their wetting properties. One example of a treatment which can change the surface properties of a polymer is corona or plasma discharge which can increase the hydrophilicity of the surface. Other surface treatments include coatings, e.g. hydrophilic coatings. Examples of porous membranes are shown in EP application 1239000, entitled "Porous hydrophilic membranes", which relates to hydrophilic porous membranes and a process for preparing them. The membranes have a high water permeability, being easily wet table by water, and in the wet state they show a much lower gas permeability than in the non-wetted state.

The size of the pores of the air trap membrane of the present invention should be small enough so that the capillary pressure inside the membrane is larger than the air pressure used in the system for pumping. According to a particular embodiment, the size of the pores is 1 micron for a pumping pressure of about 1 bar. The size of the pores should also be chosen so that the reagents and/or the analyte molecules and/or the probes can pass through the membrane. Without being limited by theory, for some porous substrates with parallel cylindrical pores the Hagen-Poiseuille law may be useful as a guide to the size of pores required (as a guide to the pumping pressure required):

$$\Delta P = 128 \; \mu \; L \; Q/(\pi \; D^4 \; N)$$

with $\Delta P$: pressure (drop); $\mu$: viscosity; L: pore length (i.e. substrate thickness); Q: volume flow; D: pore diameter; N: number of pores. The pressure thus scales with the diameter E(-4).

The above-mentioned formula describes the pressure difference required to achieve some flow Q [L/s] through the membrane. Whereas the capillary pressure (bubble pressure) is described by

$$P_c = \frac{2\gamma}{r}\cos\theta$$

where $\gamma$ is the interfacial tension (water-air interface is 72 dyne/cm), r the porous size, $\theta$ is the angle between the meniscus and the wall of the pore. For a one-micron pore and angle of 45 degrees, the capillary pressure for water air interface is 3.5 bar.

In the present invention also porous substrates with random pores or porous media made from particles can be used. In the latter case, and without being limited by theory, for some such substrates scaling the pressure (drop) with the cube of the pore diameter may be useful as a guide to the size of pores required.

Due to high capillary pressure inside the air trap membrane only fluid is pumped from chamber 2 to chamber 1 whereas air cannot penetrate into the membrane.

This leads to foam-free operation of the flow-through cell.

The device of the present invention comprises a fluid flow actuator, e.g. a means for passing fluid from chamber 2 through the substrate 3 to chamber 1. The means for passing can comprise a pump or a switch for switching a pressurized stream of fluid towards the chambers 1 and/or 2. Alternatively, a negative pressure can be produced at the outlet of the chambers, e.g. by a vacuum pump or venturi. Vacuum is also able to produce foaming of liquids which is then suppressed by the methods and materials of the present invention.

According to an alternative embodiment of the invention, the device of the invention is provided with a fluid flow actuator, such as a pump or a switch/valve combination for switching a pressurized stream of fluid, which can ensure bi-directional movement of the fluid back and forth between the two chambers.

According to this embodiment, as in other embodiments, the substrate 3 operates such that it also functions as an air trap membrane.

According to this embodiment the device can ensure an increased contact of the reagents and/or the analyte molecules and/or the probes, depending on which is provided on the substrate, so as to further increase sensitivity. To obtain bi-directional flow two fluid flow actuators may be used one for each direction and a controller for controlling which of the two actuators is used at any one time.

Use of the device as shown in Fig. 1 will be explained in more detail with reference to Figs. 3a-3h for a flow-through device equipped with one pressure means being pump 20. It is noted that the pressure difference between first chamber 2 and second chamber 1 may be established and/or released by means of pump 20 and closing and/or opening of return channel valve 24. Initially, the sample liquid is introduced in first chamber 2 (Figs. 3a and b). The sample liquid is then pumped through the substrate 3 to the second chamber 1 by increasing the pressure in first chamber 2 (Figs. 3c to e). Thereto, the pump 20 may move the flexible membrane 46 in the direction of pump volume 40, for example by introducing pressurized gas in counter volume 42 through pressure inlet opening 44 (Fig. 3d). Herein, return channel valve 24, as well as inlet valve 28 are closed. Under the influence of the increased pressure in first chamber 2, the sample will flow through the substrate 3 towards second chamber 1.

When the desired amount of sample liquid has been pumped through substrate 3, the pressure is released (Fig. 3e). In order to pump sample liquid back from the second chamber 1 into the first chamber 2, the return channel valve 24 is opened and the pressure in the first chamber 2 is lowered, for example by exhausting counter volume 42, which will cause the flexible membrane 46 to move such that the pump volume 40 will increase (Fig. 3f). Any liquid that has collected at the bottom of the second chamber 1, near the second opening 30, will be pumped to the first chamber 2 through the air trap membrane 5 and the return channel 6. This is caused by the pressure in the second chamber 1, which has been increased by the added sample liquid, keeping in mind that gas may not pass through the substrate 3. If this pressure increase is not sufficient to pump the sample liquid back to the first chamber 2, the pressure in said first chamber may be decreased by reversing the pump action of the pump 20, before opening the return channel valve 24. Subsequently, the return channel valve 24 is closed, and the cycle may be repeated (Figs. 3g and h). It is to be noted that the substrate 3 and the air trap membrane remain wet after this first cycle, i.e. they both develop their full functions as one-way valve and/or foam suppressor.

It is noted that the pump 20 may comprise a moveable part, here in the form of a flexible, and substantially gas-tight membrane 46, that may actively change the volume of pump volume 40, and hence the pressure in the first chamber 2. Alternatively, the pump 20 may be connected to separate pump means (not shown) via pressure inlet opening 44. In that case, the flexible membrane, or the moveable part in general, may be a passive part.

The pumping cycles of Figs. 3a to h may also be executed in an alternative embodiment, making use of an additional pump 60, having an additional pump volume 62 and an additional counter volume 64, divided by additional flexible membrane 66. Providing an additional pump 60 offers the advantage that in both the first chamber 2 and the second chamber 1 the pressure may be increased or decreased, independently of each other. The starting point is again introduction of the sample liquid in the first chamber 2 via sample liquid introduction device 26, inlet valve 28, apart of the return channel 6 and first opening 32 (Figs. 3a and b). Note that it is possible to provide a separate introduction channel, not combined with a return channel 6.

The sample liquid is ready to be pumped through the substrate 3. Sample liquid introduction valve 28 and return channel valve 24 are closed. Note that the flexible membrane 46 may have moved towards counter volume 42, in order to accommodate in the pump volume 40 the volume of gas that was expelled from the first chamber 2 when introducing the sample liquid (Fig. 3b).

With inlet valve 28 and return channel valve 24 closed, a pressure difference between the first chamber 2 and the second chamber 1 is established by the combined action of pump 20 and additional pump 60, such that sample liquid flows through the substrate 3 towards the second chamber 1.

To establish the pressure difference, it is possible to increase the pressure in the first chamber 2 by means of the pump 20 (Fig. 3d). Herein, the flexible membrane 46 moves in the direction of the arrow. Alternatively, or additionally, it is possible to decrease the pressure in the second chamber 1 by means of the additional pump 60. Here, the additional flexible membrane 66 moves in the indicated direction (Fig. 3d). Of course, it is also possible to increase the pressure in both chambers, but more in the first chamber 2 than in the second chamber 1, or to decrease the pressure in an analogous way.

If sufficient sample liquid, for example all of the sample liquid, has been pumped though the substrate 3 to the second chamber 1, the pressure difference is released, for example by opening the return channel valve 24, or by releasing the pressure in the pump 20 and/or the pump 60 (Fig. 3e).

In order to pump the sample liquid from the second chamber 1 through the air trap membrane 5 to the first chamber 2, the return channel valve 24 is opened while an opposite pressure difference is established. For example, pump 20 exerts a pressure on the first chamber 2 which is lower than the pressure in the second chamber 1 which is exerted by the additional pump 60 (Fig. 3f). This may for example be established by moving the flexible membranes 46 and 66 in the indicated directions. Thereto, the respective counter volumes of the pump 20 and the additional pump 60 may be pressurized accordingly. Alternatively, the moveable parts of the pumps 20 and 60 may themselves be moved in order to actively establish the pressures.

The sample liquid will flow from the second chamber 1 through the air trap membrane 5, the return channel 6 and the return channel valve 24 to the first chamber 2. If the desired amount of sample liquid, for example all of the sample liquid, has been pumped to the first chamber 2, the pressure difference is released and the return channel valve 24 is closed (Fig. 3g). The analysis device is now ready for repeating the cycle Fig. 3h).

The pumping cycles of Figs. 3a to h may also be executed in yet another embodiment, making use of one pressure means being pump 60 and one valve being inlet valve 28 as illustrated in the flow-through device of Fig. 4. Use of the device as shown in Fig. 4 will be explained in more detail with reference to Figs. 3a-3h for a flow-through device equipped with one pressure means being pump 60 and one valve being inlet valve 28.

It is noted that the pressure difference between first chamber 2 and second chamber 1 may be established and/or released by means of pump 60 without the presence of return channel valve 24 of Fig. 1. Because both the substrate 3 and the air trap membrane 5 function as one-way valves, the presence of return channel valve 24 of Fig. 1 is not required in this particular embodiment but its presence would nevertheless facilitate the introduction of the sample liquid in first chamber 2 at the onset of the experiment. Return channel valve 24 of Fig. 1 may thus optionally be included in this particular embodiment.

Initially, the sample liquid is introduced in first chamber 2 (Figs. 3a and b). The sample liquid is then pumped through the substrate 3 to the second chamber 1 by decreasing the pressure in second chamber 1 (Figs. 3c to e). Thereto, the pump 60 may move the flexible membrane 66 in the direction of pump volume 64, for example by reversing the pump action of the pump 60, or by vacuum pump or venturi (Fig. 3d). Herein, the inlet valve 28 is closed. Under the influence of the decreased pressure in second chamber 1, the sample will flow from first chamber 2 through the substrate 3 towards second chamber 1.

When the desired amount of sample liquid has been pumped through substrate 3, the pressure is released (Fig. 3e). Any liquid that has collected at the bottom of the second chamber 1, near the second opening 30, will then be pumped to the first chamber 2 through the air trap membrane 5 and the return channel 6 (Fig. 3f). Thereto, the pump 60 may move the flexible membrane 66 in the direction of pump volume 62, for example by introducing pressurized gas in counter volume 64 through pressure inlet opening 68 (Fig. 3f), keeping in mind that gas may not pass through the substrate 3 nor through the air trap membrane 5. Subsequently, the cycle may be repeated (Figs. 3g and h). It is to be noted that the substrate 3 and the air trap membrane remain wet after this first cycle, i.e. they both develop their full functions as one-way valve and/or foam suppressor.

It is noted that the pump 60 may comprise a moveable part, here in the form of a flexible, and substantially gas-tight membrane 66, that may actively change the volume of pump volume 62, and hence the pressure in the second chamber 1. Alternatively, the pump 60 may be connected to separate pump means (not shown) via pressure inlet opening 68. In that case, the flexible membrane, or the moveable part in general, may be a passive part.

The pumping cycles of Fig. 3 may be executed in yet another alternative embodiment in which fluid may be first pumped to the lower chamber 1. In this embodiment the order of fluid flow is described by a sequence of drawings given by: 3a, 3e, 3f, 3g, 3h, 3b, 3c, 3d.

The present invention has been verified experimentally with membrane material for membrane 5, which is currently used for hybridization that will bind PCR amplicons (many different ones in the liquid) specifically on specific locations on the substrate. The arrangement may be used for genotyping, polymorphism detection, gene expression analysis, immuno-assays, etc., but many other porous materials could be used.

The device of the present invention is suitable for processing or analyzing a fluid sample. For example a first reagent may be a catalyst or enzyme retained by or immobilized on the substrate and a second reagent is provided in the fluid, e.g. a substrate for the enzyme or catalyst. The device is then used as a biosensor or a reactor, e.g. a bioreactor.

Alternatively, the device of the present invention is suitable for the detection, identification or quantification of one or more analytes. In this embodiment, the analyte is envisaged to be any compound such as, but not limited to DNA, RNA, peptide protein, or chemical compounds. The detection, identification and/or quantification of the analyte is ensured in the device of the present invention by using one or more specific probes whereby either the analyte to be detected or identified or the probe(s) is/are retained by or immobilized on a permeable substrate and the respective probe or analyte is pumped through the permeable substrate. The analyte to be detected or identified or the probe(s) that are retained by or immobilized on a permeable substrate can be retained by spacer molecules. The analyte can be identified and/or quantified either in isolated or semi-isolated form or as a component of a sample (e.g. biological sample, food sample, environmental sample etc.).

Optionally, where the analyte is DNA (such as in the detection of bacterial or viral DNA), the analyte is amplified, such as by PCR, before the detection by specific probes, so as to further increase sensitivity of the detection. Such amplification means can be used with or incorporated into the device of the present invention, whereby the amplification product is pumped directly into either chamber 1 and/or 2 for pumping through or over the substrate.

The nature of the specific probe(s) used in the context of the present invention is determined by the analyte to be identified and/or quantified, and can be for instance but is not limited to a nucleic acid probe (RNA, DNA, PNA), an antibody or a fragment thereof, or a protein or peptide capable of specifically binding to the analyte such as a receptor, a hapten, or a ligand. Accordingly, the interactions on the substrate on which the detection is based can include but are not limited to hybridization, antibody-antigen binding, protein-protein interactions, ligand-receptor interactions etc.

Optionally, the probe can be labeled to allow direct detection of the probe e.g. by optical (e.g. fluorescence, visual light color) or other means (e.g. magnetic field, radioactivity) on the substrate. Alternatively, it is envisaged that the detection of the binding of the analyte to the probe is visualized and/or quantified by means of a labeled reagent capable of specifically detecting the analyte or probe bound specifically to the substrate (e.g. secondary antibodies). Detection may be done using any suitable detector, e.g. an optical detector such as a microscope, a photo detector or photo detector array, a CCD or CMOS camera that is placed in a reader. Illumination is performed by any suitable light source (e.g. LEDs, OLEDs, or laser or lamp). Excitation and emission filters can be used to apply the right wavelengths and to remove background light from the light source(s). All these components are placed in a reader device. The light is entering from the top of the cell (in chamber 2), and emitted (or reflected) light is detected from the same side.

The device of the present invention provides for the interaction of a fluid with a reagent immobilized on or retained by a porous substrate. In particular, the device of the present invention provides for the interaction of one or more analytes with one or more probes, whereby either the analytes or probes are retained by or immobilized on a substrate. The non-immobilized component of the reaction is provided in a fluid, which is pumped through the substrate. The nature of the fluid will be determined by the nature of the analyte-probe interaction. Suitable fluids for ensuring and/or promoting hybridization reactions or protein-protein interactions are known to the skilled person and can include a solvent such as water, salts, detergents, accelerants and buffering components. For hybridization reactions, the term 'hybridization buffer' is generally used, while for protein-protein interactions, reference is made to 'incubation buffer'.

According to the present invention, the one or more probes or analytes are retained by or immobilized on a permeable substrate, whereby according to a particular embodiment, the substrate is a membrane. More particularly, the membrane is of a material such as, but not limited to nylon, silica, nitrocellulose or PVDF. These membranes can be optionally cross-linked for covalent binding of small molecules such as DNA probes. Alternatively other materials can be used such as a metal oxide membrane, more particularly aluminium oxide membranes. Alternatively, the substrate is provided with channels as disclosed in WO95/11755. Three types of substrate are disclosed within WO95/11755. The first type is comprised of a multitude of hollow glass fibers. The second type is produced by electrochemical etching of a crystalline silicon wafer. The third type is produced by nuclear track etching of an inorganic substrate.

The immobilization of the analyte or probes can optionally be arranged in an array, allowing multiplexing.

The immobilization of probe(s) or analyte(s) can be through non-covalent adsopbtion or covalent binding onto the substrate. Spacer molecules may be used to attach the probe or analyte to the substrate. Immobilization can also be achieved by retaining the probe or analyte between two membranes, which are selectively non-permeable to the probe or analyte, respectively. In the latter case, the probe or analyte is retained by the membranes.

Assays in which the device according to the present invention can be used may include sequencing by hybridization, immunoassays, receptor/ligand assays and the like.

The device according to the present invention may be used to analyse biological specimen (such as blood, faeces, urine, saliva,...), food samples, waste water, drinking water, etc, for one or more up to a large number of analytes.

It will be understood that, while not being critical to the invention, the device according to the present invention can be operated in two ways. Generally, the one or more probe(s) is (are) immobilized on the substrate between chamber 1 and chamber 2 and the fluid containing the one or more analyte(s) is pumped through the substrate from upper chamber to chamber 2, whereafter optionally it is recycled to chamber 1 by means of a return channel or alternatively pumped back to chamber 1 through the substrate. Alternatively, the analyte is immobilized, either in purified form or as part of a sample on the substrate between chamber 1 and chamber 2 and reagents containing one or more probes are pumped over the substrate from chamber 1 to chamber 2.

It will furthermore be understood that the device of the present invention will further comprise additional channels and in- and outlets for introducing into, and extracting reagents and/or fluid out of the chambers of the device. For example, sample liquid coming from a PCR module enters the cell described in accordance with the embodiments of the present invention in either chamber 1 or 2. Optionally, additional hybridization is added and (after being flushed through the PCR module to include remaining PCR sample liquid) inserted in either chamber 1 or 2. After having performed a number of cycles the sample liquid is optionally removed from the system (e.g. pumped to an external chamber). Optionally a washing solution is inserted (in chamber 1 or 2) and also cycled through the device. Detection can be performed in any cycle step (before and after washing).

Important can also be that the temperature of the sample liquid is controlled, e.g. heated. This can be performed with external heaters. The temperature can, at some point - e.g. after x cycles- be raised to increase stringency of the assay (e.g. especially for hybridization assays) and to record melting curves of bound targets. Most preferably this temperature ramp up is performed during the washing cycles.

## Claims

1. A flow-through device comprising a flow path including:

   - a first chamber
   - a second chamber
   - a porous substrate between said first and second chamber, and
   - a fluid flow actuator ensuring the passing of sample liquid along the flow path from said first to said second chamber through said substrate or via a channel or channels around said substrate,

   **characterized in that** at least one porous membrane is provided in the flow path so as to reduce or prevent the formation of foam in any of the chambers or channels.

2. The device of claim 1, wherein at least one porous membrane is provided between the first and the second chamber so as to reduce or prevent the formation of foam in any of the chambers or channels.

3. The device of claim 1 or 2, wherein the at least one porous membrane is provided by the porous substrate so as to reduce or prevent the formation of foam in any of the chambers or channels.

**4.** The device of claim 1, wherein at least one porous membrane is provided between the first and second chamber and at least one porous membrane is provided in a return a channel between the second and the first chamber so as to reduce or prevent the formation of foam in any of the chambers or channels.

**5.** The device of any of claims 1 to 4 wherein the porous membrane is hydrophilic.

**6.** The device of any previous claim, wherein said sample liquid is moved unidirectionally between the first and second chambers.

**7.** The device according to claim 6, wherein said sample liquid is cycled from said second chamber to said first chamber through a return channel.

**8.** The device of any of the claims 1 to 7, wherein the fluid flow actuator is adapted for bi-directional flow to thereby move said sample liquid back from said second chamber to said first chamber through said porous substrate.

**9.** The device according to any previous claim, wherein a further porous membrane is provided between at or adjacent to an inlet of said first chamber so as to reduce or prevent the formation of foam in any of the chambers or channels.

**10.** The device according to any previous claim wherein reagents, analyte molecules or probes are immobilized on or retained by the porous substrate.

**11.** The device of claim 10, wherein said porous substrate capable of covalently or non-covalently binding oligonucleotides.

**12.** The device of claim 10 or 11, wherein the porous membrane has locations that can adsorb compounds that may interfere with the reagents, analyte molecules or probes on the porous substrate.

**13.** The device of claim 12, wherein the locations are adapted to be capture primers that have not been used in an amplification process step.

**14.** The device of claim 12, wherein the locations are adapted to remove amplicon strands that are not labeled.

**15.** The device according to any of the previous claims, wherein the device is part of a bioreactor or a biosensor.

**16.** A method for preparing an analyte in a sample liquid for detection, which method comprises the steps of

a) immobilizing a probe capable of specifically binding to said analyte on a porous substrate positioned between a first and a second chamber of an analytical device,
b) transferring said sample liquid containing said analyte along a flow path including said first and said second chamber to thereby flow sample liquid over said porous substrate,
c) optionally recycling said sample liquid to said first chamber through a return channel

**characterized in that** a porous membrane is provided in the flow path so as to reduce or prevent the formation of foam in any of the chambers or channels as a result of said transferring.

**17.** A method for processing sample liquid, which method comprises the steps of

a) immobilizing a first reagent on a porous substrate positioned between a first and a second chamber of a flow-through device,
b) transferring said sample liquid containing a second reagent along a flow path that includes said first and said second chamber to thereby flow sample liquid over said porous substrate,
c) optionally recycling said sample liquid to said first chamber through a return channel

**characterized in that** a porous membrane is provided in the flow path so as to reduce or prevent the formation of foam in any of the chambers or channels as a result of said transferring.

FIG. 1

FIG. 2

3a) Initial system status.   3b) Sample fluid insertion.   3c) Pump cycle start.

3d) Pumping down.   3e) Pump down finished.   3f) Pumping up.

3g) Finish pumping up.
Lower membrane remains
wet.

3h) End of pump cycle
/ start of new cycle.

| ⊗ Valve closed | ⟶ Liquid flow |
| ⊗ Valve open | ⟶ Gas flow |

# FIG. 3

FIG. 4

**European Patent Office**

**EUROPEAN SEARCH REPORT**

Application Number

EP 06 11 2678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/005013 A (GEORGIA TECH RESEARCH CORPORATION) 16 January 2003 (2003-01-16) | 1-3,5,6, 9,10,12, 15-17 | INV. G01N33/50 C12Q1/68 |
| Y | * abstract; figures 3a,3b * * page 10, paragraph 3 * * page 18, paragraph 3 * ----- | 1,11-14 | B01L3/00 |
| X | PATENT ABSTRACTS OF JAPAN vol. 2003, no. 12, 5 December 2003 (2003-12-05) & JP 2004 109081 A (FUJI PHOTO FILM CO LTD), 8 April 2004 (2004-04-08) * abstract * ----- | 1,7 | |
| Y | EP 0 605 828 A (BECTON, DICKINSON & COMPANY) 13 July 1994 (1994-07-13) * the whole document * ----- | 1,11-14 | |
| A | US 5 741 647 A (TAM ET AL) 21 April 1998 (1998-04-21) * the whole document * ----- | 1-17 | |
| A | EP 0 319 294 A (MONOCLONAL ANTIBODIES, INC; QUIDEL CORPORATION) 7 June 1989 (1989-06-07) * abstract * ----- | 1-17 | TECHNICAL FIELDS SEARCHED (IPC) G01N C12Q B01L |

The present search report has been drawn up for all claims

| Place of search | Date of completion of the search | Examiner |
|---|---|---|
| Munich | 19 July 2006 | Weijland, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 2678

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2006

| Patent document cited in search report | | Publication date | Patent family member(s) | | Publication date |
|---|---|---|---|---|---|
| WO 03005013 | A | 16-01-2003 | CN | 1628247 A | 15-06-2005 |
| JP 2004109081 | A | 08-04-2004 | NONE | | |
| EP 0605828 | A | 13-07-1994 | AU | 675251 B2 | 30-01-1997 |
| | | | AU | 5227893 A | 14-07-1994 |
| | | | CA | 2112645 A1 | 05-07-1994 |
| | | | JP | 2096934 C | 02-10-1996 |
| | | | JP | 6261797 A | 20-09-1994 |
| | | | JP | 8011080 B | 07-02-1996 |
| US 5741647 | A | 21-04-1998 | US | 6020187 A | 01-02-2000 |
| EP 0319294 | A | 07-06-1989 | CA | 1309654 C | 03-11-1992 |
| | | | DE | 3851744 D1 | 10-11-1994 |
| | | | DE | 3851744 T2 | 20-04-1995 |
| | | | JP | 1244369 A | 28-09-1989 |
| | | | US | 4818677 A | 04-04-1989 |

EPO FORM P0459

For more details about this annex : see Official Journal of the European Patent Office, No. 12/82

**EP 1 845 374 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5741647 A
- EP 1419819 A
- EP 1239000 A
- WO 9511755 A